Europäisches Patentamt

European Patent Office

Office européen des brevets

(19)

(11) Veröffentlichungsnummer: **0 224 025**
**A2**

(12) # EUROPÄISCHE PATENTANMELDUNG

(21) Anmeldenummer: 86114581.1

(22) Anmeldetag: 21.10.86

(51) Int. Cl.4: **C08J 5/18** , C08J 7/04 , C09D 3/74

(30) Priorität: 31.10.85 DE 8530830 U

(43) Veröffentlichungstag der Anmeldung:
03.06.87 Patentblatt 87/23

(84) Benannte Vertragsstaaten:
AT BE CH DE FR GB IT LI NL SE

(71) Anmelder: HOECHST AKTIENGESELLSCHAFT
Postfach 80 03 20
D-6230 Frankfurt am Main 80(DE)

(72) Erfinder: Klenk, Ludwig
Jungferweg 20
D-6227 Oestrich-Winkel III(DE)
Erfinder: Kastl, Erna
Pulvermühle 1
D-6272 Niedernhausen(DE)
Erfinder: Stenger, Karl
Theodor-Heuss-Strasse 27
D-6220 Rüdesheim(DE)

(54) **Bahn- oder schlauchförmige Folie mit einem geschlossenen Harzüberzug.**

(57) Die bahn-oder schlauchförmige Folie ist aus einer Trägerschicht auf Basis von faserverstärkter Cellulose und einem geschlossenen, gasundurchlässigen Harzüberzug auf Basis von Vinylidenchlorid-Mischpolymer aufgebaut. Der Harzüberzug enthält einen Farbstoff, welcher vorzugsweise aus Pigmenten besteht. Zweckmäßigerweise enthält auch die Trägerschicht einen Farbstoff, welcher den gleichen Farbton wie der Farbstoff des Harzüberzuges aufweist.

EP 0 224 025 A2

## Bahn-oder schlauchförmige Folie mit einem geschlossenen Harzüberzug

Die Erfindung bezieht sich auf eine bahn-oder - schlauchförmige Folie, aufgebaut aus einer Trägerschicht auf Basis von faserverstärkter Cellulose und einem geschlossenen, gasundurchlässigen Harzüberzug auf Basis von Vinylidenchlorid-Mischpolymer auf einer Oberfläche.

Folien dieser Art sind beispielsweise aus der DE-C-2512994, EP-A-0054162 oder EP-A-0149071 bekannt und dienen zur Verpackung von Lebensmitteln, insbesondere als Material für künstliche Wursthüllen. Der Harzüberzug kann sich bei der - schlauchförmigen Wursthülle auf der Innenoder Außenseite befinden. Er ist für Wasser, Wasserdampf, Sauerstoff und Aromastoffe praktisch undurchlässig und wird deshalb als Barriereschicht bezeichnet. Wursthüllen dieser Art werden insbesondere für Kochwürste (Leberwurst, Blutwurst) und Brühwürste (Bierschinken, Fleischwurst, Gelbwurst, Mortadella) verwendet.

Wie sich nun gezeigt hat, entstehen in den ursprünglich klaren Harzüberzügen bei Einwirkung von heißem Wasser, wie es beim Brühen oder Kochen von Würsten üblich ist, milchig-weiße Trübungen. Befindet sich der Harzüberzug mit der starken Trübung auf der Außenseite der Wursthülle, ist die Wurst unansehnlich und praktisch unverkäuflich. Ursache für diese Heißwassertrübung ist offensichtlich eine Wechselwirkung zwischen dem heißen Wasser und dem Harzüberzug.

Der Erfindung liegt somit die Aufgabe zugrunde, die Heißwassertrübung der Kunstharzschichten in diesen Folien zu vermeiden, ohne dabei die Barrierefunktion des Harzüberzugs zu verschlechtern.

Diese Aufgabe wird bei der eingangs genannten Folie dadurch gelöst, daß der Harzüberzug einen Farbstoff enthält, der zweckmäßigerweise in einer Menge von 0,5 bis 30, insbesondere 3 bis 20 Gew.-%, vorhanden ist, bezogen auf das Gewicht des gesamten Harzüberzuges (Patentanspruch 1). Wie überraschenderweise festgestellt wurde, ist die vom Fachmann durch diesen Zusatz eigentlich zu erwartende Verschlechterung der Barriereeigenschaften des Harzüberzuges nicht eingetreten. Andererseits zeigt der Harzüberzug nach der Einwirkung von heißem Wasser keine Trübung mehr. Die abhängigen Ansprüche geben zweckmäßige Weiterbildungen der Folie an.

Die bahn-oder schlauchförmige Folie zeigt den an sich bekannten Aufbau aus einer faserverstärkten Trägerschicht auf Basis von Cellulose, die in üblicher Weise durch Koagulation von Viskose und Überführung in regenerierte Cellulose hergestellt werden kann (Viskoseverfahren). Das Kunstharz zur Ausbildung der Sperrschicht wird vorzugsweise in wäßriger Dispersion vor dem Trocknen der noch gelförmigen Cellulose auf eine Oberfläche der Trägerschicht aufgebracht. Die wäßrige Dispersion enthält neben dem Kunstharz den Farbstoff in einer Konzentration von 0,5 bis 10, insbesondere 3 bis 6 Gew.-%. Vor dem Aufbringen des Kunstharzes wird zur Verbesserung der Haftung zwischen Kunstharz und Trägerschicht gegebenenfalls eine übliche Haftvermittlerschicht vorgesehen. Es ist jedoch auch möglich, die wäßrige Dispersion aus Kunstharz und Farbstoff auf die getrocknete Trägerschicht aufzubringen.

Der Farbstoff besteht aus den bei der Herstellung von Wursthüllen üblichen Mitteln, mit denen die Trägerschicht, d.h. die Cellulose und/oder die Faserverstärkung, angefärbt oder bedruckt sind. Diese Farbstoffe wurden bisher beispielsweise zur Herstellung von gelben, braunen, schwarzen oder goldfarbenen Wursthüllen aus regenerierter Cellulose oder bei der Spinnfärbung von Cellulosefasern jeweils in die Viskose eingearbeitet. Geeignete Farbstoffe bestehen insbesondere aus anorganischen oder organischen Pigmenten und sind beispielsweise unter dem Warenzeichen Novofil - (Herst. Hoechst) im Handel. Es ist besonders vorteilhaft, wenn der Farbstoff in der Kunstharzschicht mit dem Farbstoff in der Trägerschicht im Farbton übereinstimmt, wobei dann zweckmäßigerweise gleiche Farbstoffe verwendet werden. Wenn der Harzüberzug aus mehreren Einzelschichten aufgebaut ist, z.B. aus zwei verschiedenen VDC-Mischpolymeren, ist der Farbstoff in mindestens einer der Schichten vorhanden.

## Ansprüche

1. Bahn-oder schlauchförmige Folie, aufgebaut aus einer Trägerschicht auf Basis von faserverstärkter Cellulose und einem geschlossenen, gasundurchlässigen Harzüberzug auf Basis von Vinylidenchlorid-Mischpolymer, dadurch gekennzeichnet, daß der Harzüberzug einen Farbstoff enthält.

2. Folie nach Anspruch 1, dadurch gekennzeichnet, daß der Farbstoffanteil 0,5 bis 30, insbesondere 3 bis 20 Gew.-%, bezogen auf das Gesamtgewicht des Harzüberzuges beträgt.

3. Folie nach Anspruch 1 oder 2, dadurch gekennzeichnet, daß der Farbstoff aus Pigmenten besteht.

4. Folie nach einem der Ansprüche 1 bis 3, dadurch gekennzeichnet, daß die Trägerschicht Farbstoff enthält, welcher vorzugsweise den gleichen Farbton wie der Farbstoff des Harzüberzuges aufweist.

5. Folie nach Anspruch 4, dadurch gekennzeichnet, daß beide Farbstoffe identisch sind.

6. Folie nach einem der Ansprüche 1 bis 5, dadurch gekennzeichnet, daß der Harzüberzug aus mehreren Schichten aufgebaut ist, wobei mindestens eine der Schichten den Farbstoff enthält.

7. Folie nach einem der Ansprüche 1 bis 6, dadurch gekennzeichnet, daß zwischen dem Harzüberzug und der Trägerschicht eine haftungsvermittelnde Zwischenschicht vorhanden ist.

8. Folie nach einem der Ansprüche 1 bis 7, dadurch gekennzeichnet, daß bei ihrer Herstellung nach dem Viskoseverfahren der Harzüberzug aus wäßriger Dispersion auf die noch im Gelzustand sich befindliche Cellulose-Trägerschicht aufgebracht wurde, wobei die Dispersion zusätzlich 0,5 bis 10, insbesondere 3 bis 6 Gew.-% Farbpigment enthält.

9. Folie nach einem der Ansprüche 1 bis 7, dadurch gekennzeichnet, daß der Harzüberzug aus wäßriger Dispersion auf die getrocknete nach dem Viskoseverfahren hergestellte Trägerschicht aufgebracht wurde, wobei die Dispersion zusätzlich 0,5 bis 10, insbesondere 3 bis 6 Gew.-% Farbpigment enthält.

10. Schlauchförmige Folie nach einem der Ansprüche 1 bis 9, dadurch gekennzeichnet, daß sich der Harzüberzug auf der Außenseite befindet.

11. Verwendung der schlauchförmigen Folie nach einem der Ansprüche 1 bis 10 als künstliche Wursthülle.